(19) Europäisches Patentamt
European Patent Office
Office européen des brevets

(11) EP 1 383 809 B1

(12) # FASCICULE DE BREVET EUROPEEN

(45) Date de publication et mention de la délivrance du brevet:
**06.07.2005 Bulletin 2005/27**

(21) Numéro de dépôt: **02727647.6**

(22) Date de dépôt: **28.03.2002**

(51) Int Cl.[7]: **C08F 14/06**, C08F 2/18, C08F 2/38

(86) Numéro de dépôt international:
**PCT/FR2002/001094**

(87) Numéro de publication internationale:
**WO 2002/079279 (10.10.2002 Gazette 2002/41)**

(54) **POLYMERISATION EN SUSPENSION AQUEUSE DE CHLORURE DE VINYLE**
WÄSSRIGE SUSPENSIONSPOLYMERISATION VON VINYLCHLORID
POLYMERISATION IN AQUEOUS SUSPENSION OF VINYL CHLORIDE

(84) Etats contractants désignés:
**AT BE CH CY DE DK ES FI FR GB GR IE IT LI LU MC NL PT SE TR**
Etats d'extension désignés:
**RO**

(30) Priorité: **02.04.2001 FR 0104425**

(43) Date de publication de la demande:
**28.01.2004 Bulletin 2004/05**

(73) Titulaire: **ARKEMA**
**92800 Puteaux (FR)**

(72) Inventeurs:
- **BONARDI, Christian**
  **F-69230 Saint-Genis-Laval (FR)**
- **COUTURIER, Jean-Luc**
  **F-69006 Lyon (FR)**
- **GRIMALDI, Sandra**
  **F-69110 Sainte Foy-les-Lyon (FR)**
- **GUERRET, Olivier**
  **F-64230 Mazerolles (FR)**
- **KERVENNAL, Jacques**
  **F-69005 Lyon (FR)**
- **HEBRARD, Pierre**
  **F-69530 Brignais (FR)**
- **TAHA, Bouchra**
  **F-69230 Saint Genis Laval (FR)**

(56) Documents cités:
**WO-A-02/38632**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 383 809 B1

Printed by Jouve, 75001 PARIS (FR)

## Description

La présente invention concerne la fabrication de polymères et copolymères à base de chlorure de vinyle par polymérisation en suspension aqueuse du chlorure de vinyle seul ou en mélange avec un autre monomère vinylique, avec utilisation d'un radical stable de type nitroxyde comme agent d'arrêt de polymérisation.

Par polymérisation en suspension aqueuse, on entend une polymérisation réalisée en présence d'au moins un amorceur oléosoluble, la composante monomère (chlorure de vinyle seul ou en mélange avec un autre monomère vinylique) étant dispersée par des moyens mécaniques dans un milieu aqueux contenant au moins un agent de suspension.

Dans la composante monomère, la proportion de chlorure de vinyle est d'au moins 50 % en poids, de préférence supérieure à 80 %. Les monomères vinyliques copolymérisables en suspension aqueuse avec le chlorure de vinyle sont bien connus et, à titre d'exemples non limitatifs, on peut citer les esters vinyliques comme l'acétate de vinyle, les halogénures de vinylidène tels que le chlorure de vinylidène et le fluorure de vinylidène, les esters acryliques comme l'acrylate de butyle et les esters méthacryliques comme le méthacrylate de méthyle.

Les agents de mise en suspension généralement utilisés dans la polymérisation en suspension sont les colloïdes protecteurs connus, par exemple les polymères solubles dans l'eau comme les alcools polyvinyliques, les oxydes de polyéthylène, les dérivés cellulosiques solubles dans l'eau comme la méthylcellulose, la polyvinylpyrrolidone, la gélatine et les copolymères acétate de vinyle-anhydride maléïque. Ces agents de mise en suspension peuvent être utilisés seuls ou sous forme de mélanges en quantités généralement comprises entre 0,01 et 0,5 parties en poids, de préférence entre 0,04 et 0,2 parties en poids, pour 100 parties en poids de composante monomère.

Un système tamponnant le pH du milieu aqueux est généralement utilisé. Ce système qui est par exemple l'acide citrique pour un pH acide et l'hydrogénocarbonate de sodium pour un pH basique, est employé en une quantité comprise entre 0,01 et 0,2 partie en poids, de préférence entre 0,02 et 0,1 partie en poids, pour 100 parties en poids de composante monomère.

Le système amorceur oléosoluble habituellement utilisé est constitué d'un ou plusieurs composés générateurs de radicaux enclenchant la polymérisation de la composante monomère. Ces radicaux sont généralement issus de la décomposition thermique de peroxydes de diacyle, de peroxydicarbonates de dialkyle ou de peroxy-tert-alcanoates. Il est d'usage industriellement d'exprimer la quantité d'amorceur(s) introduite dans le mélange réactionnel par la teneur globale en oxygène actif susceptible d'être libéré par le système amorceur. Les quantités totales en oxygène actif généralement utilisées sont comprises entre 0,0005 et 0,01 partie en poids, de préférence entre 0,0015 et 0,005 partie en poids, pour 100 parties en poids de composante monomère. Lorsque l'on utilise un mélange d'amorceurs ayant des temps de demi-vie différents pour une température donnée, la proportion de l'un par rapport à l'autre peut aller de 1 à 99 % en poids, de préférence de 10 à 90 %. A température identique, plus il y aura d'amorceur introduit dans le milieu réactionnel plus la réaction sera rapide. A durée de polymérisation identique, plus la température de polymérisation sera élevée, moins il restera d'amorceur dans le milieu réactionnel.

Dans un procédé de polymérisation en suspension aqueuse, industriellement mis en oeuvre en mode discontinu (batch), il est généralement souhaitable d'arrêter la polymérisation après avoir atteint un taux de conversion prédéterminé de façon à obtenir un polymère stable et uniforme. Il peut aussi s'avérer parfois nécessaire d'arrêter ou de ralentir la réaction dans la phase finale de polymérisation, c'est-à-dire lorsque la conversion a atteint des valeurs supérieures à 60 % massiques pour éviter des exothermies finales difficilement maîtrisables par un simple échange thermique aux parois (double enveloppe ou condenseur) ou d'arrêter d'urgence la polymérisation lors d'emballements. A cet effet, on utilisera des agents dits agents d'arrêt de polymérisation.

Les agents d'arrêt ("short-stoppers" ou "killers") les plus couramment utilisés pour la polymérisation en suspension aqueuse du chlorure de vinyle sont l'ATSC (acétone-thiosemicarbazone), le bisphénol A (4,4'-isopropylidènediphénol), le butylhydroxyanisole (BHA) et l'Irganox® 245 (2,4-diméthyl-6-sec-hexadécylphénol) seul ou en mélange avec l'Irganox® 1076 [3-(3,5-di-tert-butyl-4-hydroxyph'ényl)]propionate d'octadécyle. L'Irganox® 1141 (ci-après IGX 1141) est un mélange commercial de 80 parties en poids d'Irgnnox® 245 et de 20 parties en poids d'Irganox® 1076. Cependant, ces agents ne donnent pas entière satisfaction et on cherche actuellement à les remplacer par des composés plus faciles à mettre en oeuvre (solubilité en milieu aqueux) et au moins aussi efficaces.

Il a maintenant été trouvé que la combinaison d'un système amorceur comprenant au moins un composé choisi parmi les peroxydicarbonates de dialkyle, les peroxy-tert-alcanoates et les peroxydes de diacyle, et d'au moins un agent d'arrêt de polymérisation choisi parmi les radicaux stables de type nitroxyde permet non seulement d'arrêter efficacement la polymérisation, mais aussi d'obtenir en même temps une résine PVC ou de copolymère conduisant à des matériaux présentant une excellente blancheur. De plus, par rapport aux agents d'arrêt usuels, le nitroxyde peut être choisi de façon à présenter l'avantage d'être instantanément hydrodiluable aux concentrations utiles sans ajout de stabilisant ou de solvant.

L'invention a donc pour objet un procédé de polymérisation en suspension aqueuse du chlorure de vinyle seul ou en mélange avec moins de 50 % d'un autre monomère vinylique, caractérisé en ce que le système amorceur

de polymérisation comprend au moins un composé choisi parmi les peroxydicarbonates de dialkyle, les peroxy-tert-alcanoates et les peroxydes de diacyle, et en ce que l'on utilise au moins un agent d'arrêt de polymérisation choisi parmi les radicaux stables de type nitroxyde.

De manière générale, les polymérisations en suspension aqueuse du chlorure de vinyle ou d'une composante monomère à base de chlorure de vinyle sont conduites entre 45 et 80°C, de préférence entre 50 et 70°C, ce qui permet une très large utilisation des amorceurs de la famille des peroxydicarbonates de dialkyle.

Dans les peroxydicarbonates de dialkyle, chaque radical alkyle peut contenir de 2 à 16 atomes de carbone et être linéaire, ramifié ou cyclique. Comme exemples non limitatifs de tels peroxydicarbonates de dialkyle, on peut mentionner les peroxydicarbonates de diéthyle, de diisopropyle, de di-n-propyle, de dibutyle, de dicétyle, de dimyristyle, de di(4-tert-butylcyclohexyle) ou de di(2-éthylhexyle). On préfère les peroxydicarbonates dont chaque radical alkyle contient de 6 à 16 atomes de carbone et, plus particulièrement, le peroxydicarbonate de di(2-éthylhexyle).

Les peroxydicarbonates de dialkyle utilisés selon l'invention sont classés dans la famille des amorceurs rapides. Ils ont de manière générale une demi-vie de 1 heure aux alentours de 56-67°C et peuvent donc être utilisés pour des températures de polymérisation du chlorure de vinyle comprises entre 50 et 70 °C.

Cependant, lorsque la température de polymérisation choisie est peu élevée (entre 50 et 57°C), il peut s'avérer utile d'employer une combinaison d'amorceurs ayant des temps de demi-vie différents aux températures choisies, contenant par exemple un peroxydicarbonate de dialkyle et un amorceur de la famille des peroxy-tert-alcanoates très rapides, ou une combinaison d'amorceurs de la famille des peroxy-tert-alcanoates comprenant un rapide et un très rapide.

Les peroxy-tert-alcanoates très rapides ont de manière générale une demi-vie de 1 heure aux alentours de 53-61°C. Comme exemples non limitatifs d'amorceurs très rapides de la famille des peroxy-tert-alcanoates, on peut citer le peroxynéodécanoate de 1,1-diméthyl-3-hydroxybutyle, le peroxynéodécanoate de cumyle, le peroxynéodécanoate de 1,1,3,3-tétraméthylbutyle et le 1,3-di(2-néodécanoylperoxyisopropyl)benzène.

Lorsque la température de polymérisation choisie est un peu plus élevée (entre 56 et 63°C), il peut s'avérer utile d'employer une combinaison d'amorceurs ayant des temps de demi-vie différents aux températures choisies, contenant par exemple un peroxydicarbonate de dialkyle et un amorceur de la famille des peroxy-tert-alcanoates rapides, ou une combinaison de peroxy-tert-alcanoates rapides.

Les peroxy-tert-alcanoates rapides ont de manière générale une demi-vie de 1 heure entre de 61 et 71°C et peuvent donc être utilisés pour des températures de polymérisation du chlorure de vinyle comprises entre 50 et 70 °C. Comme exemples non limitatifs de peroxy-tert-alcanoates rapides, on peut citer le peroxynéodécanoate de tert-butyle et le peroxynéodécanoate de tert-amyle.

Dans le cas d'une température de polymérisation assez élevée (entre 62 et 70°C), il peut s'avérer utile d'employer une combinaison d'amorceurs ayant des temps de demi-vie différents aux températures choisies, contenant par exemple un peroxydicarbonate de dialkyle ou un peroxy-tert-alcanoate rapide et un amorceur plutôt lent de la famille des peroxydes de diacyle comme le peroxyde de dilauroyle ou des peroxy-tert-alcanoates tels que le peroxy pivalate de tert-butyle.

L'agent d'arrêt de polymérisation ("short-stopper" ou "killer") selon l'invention est de préférence choisi parmi les radicaux stables de type nitroxyde de formule :

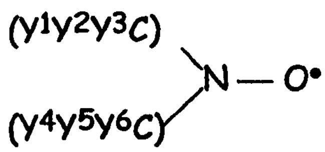

(I)

dans laquelle les groupes $Y^1$ à $Y^6$, identiques ou différents, représentent un atome d'hydrogène, un radical alkyle, linéaire ou ramifié, ayant un nombre d'atomes de carbone allant de 1 à 10, un radical cycloalkyle ayant un nombre d'atomes de carbone allant de 3 à 20, un atome d'halogène, un radical cyano, un radical phényle, un radical hydroxyalkyle ayant un nombre d'atomes de carbone allant de 1 à 4, un radical dialcoxyphosphonyle, diphénoxyphosphonyle, un radical alcoxycarbo nyle, alcoxycarbonylalkyle, ou bien 2 ou plus des groupes $y^1$ à $y^6$ peuvent être liés avec l'atome de carbone qui les porte pour former des structures cycliques, lesquelles peuvent comprendre une ou plusieurs fonctions extracycliques, choisis parmi : HO—, $CH_3C(O)$—, $CH_3O$—, $H_2N$—$CH_3C(O)NH$—, $(CH_3)_2N$— , $R^1C(O)O$- ou $R^1$ représente un radical hydrocarboné contenant de 1 à 20 atomes de carbone ; ou bien encore peuvent comprendre 1 ou plusieurs hétéroatomes extra- ou intracyliques tels que O, N.

A titre d'illustration de nitroxydes (I) utilisables selon la présente invention, on citera :

- le 2,2,5,5 tétraméthyl-1-pyrrolidinyloxy (généralement commercialisé sous la marque PROXYL) ;
- le 3-carboxy-2,2,5,5-tétraméthyl-pyrrolidinyloxy (communément appelé 3-carboxy PROXYL) ;
- le 2,2,6,6-tétraméthyl-1-pipéridinyloxy (communément appelé TEMPO) ;
- le 4-hydroxy-2,2,6,6-tétraméthyl-1-pipéridinyloxy (communément appelé le 4-hydroxy-TEMPO) :

- le 4-méthoxy-2,2,6,6-tétraméthyl-1-pipéridinyloxy (communément appelé le 4-méthoxy-TEMPO) ;
- le 4-oxo-2,2,6,6-tétraméthyl-1-pipéridinyloxy (communément appelé le 4-oxo-TEMPO) ;
- le 4-amino-2,2,6,6-tétraméthyl-1-pipéridinyloxy (communément appelé le 4-amino-TEMPO) ;
- le 4-acétamido-2,2,6,6-tétraméthyl-1-pipéridinyloxy (communément appelé le 4-acétamido-TEMPO) ;
- le N-tertiobutyl-1-phényl-2-méthylpropyl nitroxyde,
- le N-(2-hydroxyméthylpropyl)-1-phényl-2-méthylpropylnitroxyde),
- le N-tertiobutyl-1-diéthylphosphono-2,2-diméthyl-propylnitroxyde,
- le N-tertiobutyl-1-dibenzylphosphono-2,2diméthylpropylnitroxyde,
- le N-tertiobutyl-1-di(2,2,2-trifluoroéthyl)phosphono-2,2diméthylpropylnitroxyde,
- le N-tertiobutyl-[(1-diéthylphosphono)-2-méthylpropyl]nitroxyde,
- le N-(1-méthyléthyl)-1-cyclohexyl-1-(diéthyl-phosphono)nitroxyde,
- le N-(1-phénylbenzyl)-[(1-diéthylphosphono)-1-méthyléthyl]nitroxyde :

- le N-phényl-1-diéthylphosphono-2,2-diméthylpropylnitroxyde,
- le N-phényl-1-diéthylphosphono-1-méthyléthylnitroxyde,
- le N-(1-phényl2-méthylpropyl)-1-diéthylphosphonméthyléthylnitroxyde,
- le bis-1-oxyl-2,2,6,6-tétraméthylpipéridine-4-yl)sébaçate commercialisé sous la marque "CXA 5415" par la Société CIBA SPEC. CHEM.

Ces nitroxydes peuvent être utilisés tels quels ou bien sous forme de formulations.

Par formulation, on entend selon la présente invention, une composition aqueuse, organique ou hydro-organique comprenant au moins un nitroxyde et éventuellement un additif organique et/ou minéral (NaCl, NaOH, KOH). A titre d'illustration de solvants organiques utilisables dans les compositions organiques ou hydro-organiques, on citera les alcools tels que le méthanol ou l'éthanol.

On utilisera tout particulièrement le 4-hydroxy-TEMPO et le N-tertiobutyl-1-diéthylphosphono-2,2-diméthylpropylnitroxyde.

Le 4-hydroxy-TEMPO est utilisé, de préférence, sous forme de formulation contenant une teneur pondérale en 4-hydroxy-TEMPO allant de 0,01% à 90 %.

Le procédé selon l'invention peut être mis en oeuvre de façon connue en soi, consistant par exemple à dissoudre un colloïde protecteur dans un milieu aqueux ou une composante monomère, à disperser l'amorceur de polymérisation oléosoluble dans le milieu aqueux ou à le dissoudre dans la composante monomère, et à dissoudre un système tamponnant le pH du milieu aqueux. Les traces d'oxygène sont éliminées de manière à avoir une teneur résiduelle en oxygène dissous dans l'eau comprise entre 0,0005 et 0,05 partie en poids, de préférence entre 0,001 et 0,02 partie en poids, pour 100 parties en poids d'eau. La composante monomère est ensuite introduite dans le réacteur, puis le mélange réactionnel est agité et porté à une température comprise entre 45 et 80°C, de préférence entre 50 et 70°C.

Pendant la polymérisation, il n'est pas nécessaire de maintenir à des valeurs constantes la pression et la température du mélange réactionnel. Une augmentation de température programmée soit en début, soit à la fin du cycle de polymérisation permet d'accélérer la vitesse de décomposition des amorceurs et la vitesse de polymérisation. Si cette température et cette pression sont maintenues constantes, la polydispersité des masses moléculaires des chaînes polymères sera comprise entre 1,8 et 2,5. Dans le cas d'une polymérisation avec des rampes de températures programmées sur toute la durée de polymérisation, on observera une polydispersité comprise entre 1,8 et 3,5.

La polymérisation se termine par appauvrissement de la phase de monomère liquide et cela se traduit par une modification de l'équilibre liquide / vapeur en monomère et une chute de pression est observée. A l'amorce de la chute de pression, la conversion massique en monomère est voisine de 65-75 %.

En tant que short-stopper, le nitroxyde utilisé selon l'invention est introduit entre 60 et 90 % de conversion massique, de préférence entre 70 et 80 % c'est-à-dire lorsque la chute de pression est déjà engagée. Pour 100 parties en poids de composante monomère, la quantité de nitroxyde à utiliser peut aller de 0,0001 à 0,1 partie en poids et est de préférence comprise entre 0,00015 et 0,01 partie en poids.

Le nitroxyde utilisé selon l'invention peut être utilisé en combinaison avec d'autres agents d'arrêt de polymérisation comme les dialkylhydroxylamines, par exemple la diéthylhydroxylamine (DEHA).

Une fois la polymérisation terminée, on sépare le polymère formé du milieu aqueux, puis on l'essore et le sèche. Il se présente généralement sous forme de particules d'une granulométrie de l'ordre de 80 à 250 micromètres.

Dans les exemples suivants qui illustrent l'invention sans la limiter, les parties et pourcentages indiqués sont exprimés en poids sauf mention contraire.

**EXEMPLE 1 (témoin)**

Dans un réacteur d'une capacité de 30 litres, équipé d'un agitateur de type Impeller à 3 branches et d'une double enveloppe, on introduit à température ambiante et sous agitation (250 t/min) 14 kg d'eau déminéralisée, 2,52 g d'acide citrique, 3,73 g d'alcool polyvinylique ayant un taux d'hydrolyse de 78 % molaires, 3,73 g d'alcool polyvinylique ayant un taux d'hydrolyse de 72 % molaires, 8,08 g d'une solution aqueuse (à 39 % de matière active) d'alcool polyvinylique ayant un taux d'hydrolyse de 55 % molaires, et 13,63 g d'une émulsion de peroxydicarbonate de di(2-éthylhexyle) à 40 % de matière active (Luperox® 223 EN40). La teneur en oxygène actif est alors de 28 ppm par rapport au poids du chlorure de vinyle monomère (CVM) qui sera ensuite chargé.

Après avoir fermé le réacteur, on le met sous vide partiel (6,66 kPa absolus) que l'on maintient pendant 15 minutes. On porte ensuite l'agitation à 330t/min et on introduit alors 9 kg de CVM.

Par circulation d'eau froide dans la double enveloppe, on régule le chauffage pour atteindre en 30 minutes la température de polymérisation de 56,5°C. Le moment où le milieu de polymérisation atteint 56,5°C est considéré comme le début de la polymérisation (temps = to) et la pression à cet instant (Po) est alors prise en référence.

Après 30 minutes de polymérisation (soit au temps to + 30 min), on introduit en continu dans le réacteur 4 kg d'eau avec un débit constant de 1,2 kg/h, pour améliorer l'échange thermique en maintenant constante la surface d'échange de la double enveloppe et pour diminuer la viscosité de la suspension aqueuse après 60 % de conversion du CVM en PVC, conversion calculée par un bilan calorifique établi aux bornes du réacteur.

L'appauvrissement de la phase gaz CVM du réacteur se traduit par une baisse de pression entre 65 et 70 % de conversion. Dès que la pression a chuté de 1 bar par rapport à Po , la polymérisation est arrêtée par refroidissement rapide du milieu au moyen d'eau froide injectée dans la double enveloppe.

La teneur résiduelle en peroxydicarbonate de di(2-éthylhexyle) est d'environ 90 ppm en poids par rapport au poids initial de monomère.

Le CVM résiduel est ensuite éliminé du milieu réactionnel par les techniques classiques de remise à pression atmosphérique (dégazage) et les traces de CVM sont ensuite éliminées par un dégazage sous vide de 13,33 kPa à 50°C (stripping).

La résine PVC ainsi obtenue (valeur K = 67) est alors essorée, séchée durant 6 heures en lit fluidisé par un courant d'air sec chauffé à 50°C et tamisée sur toile de 500 µm.

L'indice de coloration de cette résine sur plaque pressée ou WIPP (White Index Pressed Plate) est évalué en opérant comme suit:

Dans un mélangeur BRABENDER de 600 ml, on mélange pendant 5 minutes à 50 t/min et à 96°C 150 g de résine avec 12 g d'une solution de 1 partie de phthalate de dioctyle dans 17 parties de MOK (solution de stabilisant thermique à base d'étain sous forme liquide commercialisé par la Société CIBA). Le mélange est vidangé et, au moyen d'une presse WEBER et au plus tard dans les 15 minutes suivantes, 20 g du mélange sont pressés pendant 2 minutes à 184°C et sous 300 bars dans un moule de 70 mm de diamètre et de 3 mm d'épaisseur entre deux feuilles d'aluminium de 0,05 mm d'épaisseur. La plaque obtenue est ensuite refroidie dans l'eau pendant 45 secondes, puis dans l'intervalle de 30 à 90 minutes après le pressage sa coloration est mesurée au moyen de l'appareil HUNTERLAB D 25 M DP 9000 et exprimée selon la norme ASTM E 313 en WIPP par la formule:

$$WIPP = \frac{L}{100}(L - 5{,}71b)$$

les valeurs L et b étant données par l'appareil.

**EXEMPLES 2 *A* 4**

On a opéré comme à l'exemple 1 sauf que, dès que la chute de pression a atteint 0,3 bar (c'est-à-dire à Po

- 0,3 bar), on a injecté en 2 minutes dans le milieu réactionnel une solution aqueuse à 0,04 % de 4-hydroxy-TEMPO (4-hydroxy-2,2,6,6-tétraméthylpipéridinyloxy noté OH-TEMPO dans la suite) à raison de respectivement 1,5, 3 et 6 ppm en poids d'OH-TEMPO par rapport au poids initial de CVM et on a maintenu pendant 15 minutes le milieu réactionnel à 56,5°C avant de le refroidir. Le dégazage, le stripping, l'essorage, le séchage et le tamisage ont ensuite été effectués de la même manière qu'à l'exemple 1, et les résines PVC ainsi obtenues ont été évaluées en WIPP selon le même test.

**EXEMPLE 5**

On a opéré comme à l'exemple 1 sauf que, dès que la chute de pression a atteint 0,3 bar (c'est-à-dire à Po - 0,3 bar), on a injecté dans le milieu réactionnel une solution de SG1 (N-tertiobutyl-1-diéthylphosphono-2,2-diméthylpropyl nitroxyde) à 5,35 % dans le méthanol à raison de 115 ppm en poids de SG1 par rapport au poids initial de CVM et on a maintenu pendant 15 minutes le milieu réactionnel à 56,5°C avant de le refroidir. Le dégazage, le stripping, l'essorage, le séchage et le tamisage ont ensuite été effectués de la même manière qu'à l'exemple 1.

**EXEMPLE 6**

On a opéré comme à l'exemple 1 sauf que, dès que la chute de pression a atteint 0,3 bar (c'est-à-dire à Po - 0,3 bar), on a injecté dans le milieu réactionnel un mélange d'OH-TEMPO et de DEHA à des teneurs en poids respectives de 3 ppm et de 130 ppm par rapport au poids initial de CVM et on a maintenu pendant 15 minutes le milieu réactionnel à 56,5°C avant de le refroidir. Le dégazage, le stripping, l'essorage, le séchage et le tamisage ont ensuite été effectués de la même manière qu'a l'exemple 1, et les résines PVC ainsi obtenues ont été évaluées en WIPP selon le même test.

**EXEMPLES 7 ET 8 (comparatifs)**

On a répété l'exemple 2 mais en remplaçant la solution aqueuse d'OH-TEMPO par le bisphénol A (BPA) utilisé sous forme d'une solution méthanolique à 35 % à raison de 370 ppm en poids de BPA par rapport au poids initial de CVM (exemple 7) ou par l'Irganox® 1141 (IGX 1141) qui se présente sous forme d'une solution à 8 % dans une huile de soja époxydée à raison de 620 ppm en poids de IGX1141 par rapport au poids initial de CVM (exemple 8).

Les exemples 1 à 8 et leurs résultats sont résumés dans le tableau 1 suivant.

TABLEAU 1

| EXEMPLE | AGENT D'ARRET | | | $\Delta P/\Delta t$ (mbar/min) | WIPP |
|---|---|---|---|---|---|
| | nature | masse /monomère | mol | | |
| 1 | néant | 0 | 0 | 40 | 35 |
| 2 | OH-TEMPO | 1,5 ppm | 0,000078 | 25 | nd |
| 3 | OH-TEMPO | 3 ppm | 0,000157 | 15 | nd |
| 4 | OH-TEMPO | 6 ppm | 0,000314 | 0 | 42 |
| 5 | SG1 | 115 ppm | 0,0035 | 0 | nd |
| 6 | OH-TEMPO/ DEHA | 3 ppm/ 130 ppm | 0,000157/ 0,0131 | 0 | 40 |
| 7 | BPA | 370 ppm | 0,0151 | 0 | 46 |
| 8 | IGX 1141 | 620 ppm | 0,0152 | 3 | 47 |
| nd = non mesuré | | | | | |

L'OH-TEMPO joue le rôle d'agent d'arrêt de polymérisation dans les conditions des exemples 2 à 4 car la pente de la chute de pression diminue. L'effet d'arrêt de polymérisation est obtenu pour 6 ppm d'OH-TEMPO. La blancheur de la résine est de bonne qualité. Pour le SG1, l'effet d'arrêt de polymérisation est atteint à des teneurs inférieures à 115 ppm.

**EXEMPLE 9**

On a opéré comme dans l'exemple 1, excepté que l'on a remplacé les 13,63 g d'une émulsion de peroxydicarbonate de di(2-éthylhéxyle) à 40 % de matière active (Luperox® 223 EN40) par 12,98 g d'une émulsion de peroxynéodécanote de tert-butyle (Luperox 1OM75) à 40 % de matière active et que, lorsque la chute de pression a atteint 0,3 bar, on a injecté en 2 minutes dans le milieu réactionnel 50 g d'une solution aqueuse à 0,22 % de 4-hydroxy-TEMPO à raison de 12,5 ppm en poids d'OH-TEMPO par rapport au poids initial de CVM et on a maintenu pendant 15 minutes le milieu réactionnel à 56,5°C avant de refroidir.

Le dégazage, le stripping, l'essorage, le séchage et le tamisage ont ensuite été effectués de la même manière qu'à l'exemple 1, et la résine PVC ainsi obtenue a été évaluée en WIPP selon le même test.

## EXEMPLE 10

On a opéré comme dans l'exemple 9, excepté que l'on a utilisé 100 g d'une solution aqueuse à 0,03 % de 4-hydroxy-TEMPO à raison de 3 ppm en poids d'OH-TEMPO par rapport au poids initial de CVM.

Les résultats des exemples 9 et 10 sont reportés dans le tableau 2 ci-après.

TABLEAU 2

| EXEMPLE | AGENT D'ARRET | | | ΔP/Δt (mbar/min) | WIPP |
|---|---|---|---|---|---|
| | nature | masse / monomère | mol | | |
| 9 | OH-TEMPO | 12,5 ppm | 0,00065 | 0 | 52,7 |
| 10 | OH-TEMPO | 3 ppm | 0,000157 | 30 | 53,5 |

## EXEMPLE 11

Dans un réacteur d'une capacité de 30 litres, équipé d'un agitateur de type Impeller à 3 branches et d'une double enveloppe, on introduit à température ambiante et sous agitation (250 t/min) 14 kg d'eau déminéralisée, 2,52 g d'acide citrique, 7,2 g d'alcool polyvinylique ayant un taux d'hydrolyse de 78 % molaires, 5,4 g d'alcool polyvinylique ayant un taux d'hydrolyse de 72 % molaires, 3,06 g d'une solution aqueuse (à 39 % de matière active) d'alcool polyvinylique ayant un taux d'hydrolyse de 55 % molaires.

Après avoir fermé le réacteur, on le met sous vide partiel (6,66 kPa absolus) que l'on maintient pendant 30 minutes. On porte ensuite l'agitation à 330t/min et on introduit alors 9 kg de CVM.

On régule le chauffage pour atteindre en 45 minutes la température de polymérisation de 70°C (temps = to). A cette température, on ajoute 20 g d'une solution contenant 3,75 g de peroxypivalate de t-butyl (Luperox 11M75) et 16,25 g d'isododécane.

Après 30 minutes de polymérisation (soit au temps to + 30 min), on introduit en continu dans le réacteur 3,4 kg d'eau avec un débit constant de 1,2 kg/h, pour améliorer l'échange thermique en maintenant constante la surface d'échange de la double enveloppe et pour diminuer la viscosité de la suspension aqueuse après 60 % de conversion du CVM en PVC, conversion calculée par un bilan calorifique établi aux bornes du réacteur.

Dès que la chute de pression a atteint 0,3 bar, on injecte dans le milieu réactionnel 50 g d'une solution aqueuse à 0,09 % d'OH-TEMPO soit 5 ppm en poids d' OH-TEMPO par rapport au poids initial de CVM et on maintient pendant 15 minutes le milieu réactionnel à 70°C avant de refroidir.

Le dégazage, le stripping, l'essorage, le séchage et le tamisage ont ensuite été effectués de la même manière qu'à l'exemple 1.

On mesure le ΔP/Δt et WIPP évalué selon le test décrit dans l'exemple 1.

Les résultats sont les suivants :

$$\Delta P/\Delta t \text{ (mbar/min)} = 0$$

$$\text{WIPP} = 63{,}4$$

## EXEMPLES 12 ET 13 (arrêt d'urgence de la polymérisation)

## EXEMPLE 12 :

Dans un réacteur d'une capacité de 1 200 litres, équipé d'un agitateur de type Impeller à 3 branches, d'un réservoir sous pression d'azote contenant un "killer", et d'une double enveloppe, on introduit à température ambiante

et sous agitation (125 t/min) 500 kg d'eau déminéralisée, 90 g d'acide citrique, 132,5 g d'alcool polyvinylique ayant un taux d'hydrolyse de 78 % molaires, 132,5 g d'alcool polyvinylique ayant un taux d'hydrolyse de 72 % molaires, 112 g d'une solution aqueuse (à 39 % de matière active) d'alcool polyvinylique ayant un taux d'hydrolyse de 55 % molaires, et 166 g de peroxydicarbonate de di(2-éthylhexyle) à 75 % de matière active (Luperox® 223 M 75). La teneur en oxygène actif est de 18 ppm par rapport au poids du CVM qui sera ensuite chargé.

Après avoir fermé le réacteur, on le met sous vide partiel (6,66 kPa absolus) que l'on maintient pendant 30 minutes. On porte ensuite l'agitation à 250 t/min et on introduit alors 320 kg de CVM.

Par circulation d'eau froide dans la double enveloppe, on régule le chauffage pour atteindre en 30 minutes la température de polymérisation de 56,5°C. Le moment où le milieu de polymérisation atteint 56,5°C est considéré comme le début de la polymérisation (temps = to) et la pression à cet instant (Po) est alors prise en référence.

Après 40 min de polymérisation (soit au temps to + 40 min), on coupe la circulation d'eau de refroidissement de la double enveloppe. On observe une augmentation de la pression et de la température qui est caractérisée par un $\Delta P/\Delta t$ et $\Delta T/\Delta t$.

A to + 45 minutes, on introduit 170 g d'une solution aqueuse d'OH-TEMPO à 5,88 % en poids d'OH-TEMPO contenu dans le réservoir sous pression d'azote, soit 31 ppm en poids d'OH-TEMPO par rapport au poids du CVM chargé dans le réacteur.

On enregistre les variations de la température et de la pression qui sont indiquées dans le tableau 3.

**EXEMPLE 13 (comparatif):**

On opère comme dans l'exemple 12, sauf qu'à to + 45, on introduit 1,5 1 d'une solution méthanolique à 25 % en poids de bisphénol A (BPA) soit 1 313 ppm en poids de BPA par rapport au poids du CVM chargé dans le réacteur.

Comme dans l'exemple 12, on enregistre les variations de la température et de la pression qui sont indiquées dans le tableau 3 ci-après.

TABLEAU 3

| Exemple | killer | | $\Delta P/\Delta t$ (mbar/min) | | $\Delta T/\Delta t$ (°C/min) | |
|---|---|---|---|---|---|---|
| | nature | masse / monomère | avant | après | avant | après |
| | | | l'addition de killer | | l'addition de killer | |
| 12 | OH-TEMPO | 31 ppm | 60 | 0 | 0,2 | 0 |
| 13 | BPA | 1 313 ppm | 94 | 3 | 0,3 | 0,03 |

On constate que l'OH-TEMPO joue le rôle d'agent d'arrêt d'urgence (killer) à très faible teneur.

## Revendications

1. Procédé de polymérisation en suspension aqueuse du chlorure de vinyle seul ou en mélange avec moins de 50 % d'un autre monomère vinylique, **caractérisé en ce que** le système amorceur de polymérisation comprend au moins un composé choisi parmi les peroxydicarbonates de dialkyle, les peroxy-tert-alcanoates et les peroxydes de diacyle et **en ce que** l'on utilise au moins un agent d'arrêt de polymérisation choisi parmi les radicaux stables de type nitroxyde, introduit lorsque la conversion massique en monomère est comprise entre 60 et 90%.

2. Procédé selon la revendication 1 dans lequel l'agent d'arrêt de polymérisation est choisi parmi les nitroxydes de formule :

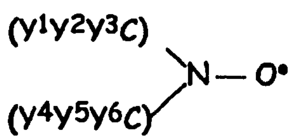

(I)

dans laquelle les groupes $Y^1$ à $Y^6$, identiques ou différents, représentent un atome d'hydrogène, un radical alkyle,

linéaire ou ramifié, ayant un nombre d'atomes de carbone allant de 1 à 10, un radical rycloalkyle ayant un nombre d'atomes de carbone allant de 3 à 20, un atome d'halogène, un radical cyano, un radical phényle, un radical hydroxyalkyle ayant un nombre d'atomes de carbone allant de 1 à 4, un radical dialcoxyphosphonyle, diphénoxyphosphonyle, un radical alcoxycarbonyle, alcoxycarbonylalkyle ; ou bien 2 ou plus des groupes $y^1$ à $y^6$ peuvent être liés avec l'atome de carbone qui les porte pour former des structures cycliques, lesquelles peuvent comprendre une ou plusieurs fonctions extracycliques, choisis parmi $H_2N—CH_3C(O)NH—$, $(CH_3)_2N—$ , $R^1C(O)O$- ou $R^1$ représente un radical hydrocarboné contenant de 1 à 20 atomes de carbone ; ou bien encore peuvent comprendre 1 ou plusieurs hétéroatomes extra- ou intracyliques tels que 0, N.

3. Procédé selon la revendication 2, **caractérisé en ce que** les nitroxydes sont utilisés tels quels ou sous forme de formulations.

4. Procédé selon la revendication 2, **caractérisé en ce que** l'agent d'arrêt de polymérisation est le 4-hydroxy-2,2,6,6-tétraméthyl-1-pipéridinyloxy(4-hydroxy-TEMPO).

5. Procédé selon les revendications 3 et 4, **caractérisé en ce que** le 4-hydroxy-TEMPO est utilisé sous forme de formulations contenant une teneur pondérale en 4-hydroxy-TEMPO allant de 0,01 % à 90 %.

6. Procédé selon le revendication 2, **caractérisé en ce que** l'agent d'arrêt de polymérisation est le N-tertiobutyl-1-diéthylphosphono-2,2-diméthylpropylnitroxyde (SG1).

7. Procédé selon l'une des revendications 2 à 6, dans lequel le nitroxyde est associé à un autre agent d'arrêt de polymérisation comme une dialkylhydroxylamine.

8. Procédé selon la revendication 7, **caractérisé en ce que** la dialkylhydroxylamine est la diéthylhydroxylamine.

9. Procédé selon la revendication 1 dans lequel chaque radical alkyle du peroxydicarbonate de dialkyle contient de 2 à 16 atomes de carbone, de préférence 6 à 16 atomes de carbone.

10. Procédé selon la revendication 9 dans lequel le peroxydicarbonate de dialkyle est le peroxydicarbonate de di (2-éthylhexyle).

11. Procédé selon la revendication 1 dans lequel le système amorceur de polymérisation comprend un peroxydicarbonate de dialkyle et un peroxy-tert-alcanoate très rapide.

12. Procédé selon la revendication 11 dans lequel le peroxy-tert-alcanoate très rapide est le peroxynéodécanoate de 1,1-diméthyl-3-hydroxybutyle.

13. Procédé selon la revendication 1 dans lequel le système amorceur de polymérisation comprend un peroxydicarbonate de dialkyle et un peroxy-tert-alcanoate rapide.

14. Procédé selon la revendication 1 dans lequel le système amorceur de polymérisation est un mélange d'un peroxydicarbonate de dialkyle ou d'un peroxy-tert-alcanoate rapide avec un peroxyde de diacyle.

15. Procédé selon la revendication 14 dans lequel le peroxy-tert-alcanoate rapide est le peroxynéodécanoate de tert-butyle et le peroxyde de diacyle est le peroxyde de dilauroyle.

16. Procédé selon la revendication 1 dans lequel le système amorceur de polymérisation est un mélange de deux peroxy-tert-alcanoates rapides ou un mélange d'un peroxy-tert-alcanoate très rapide et d'un peroxy-tert-alcanoate rapide.

17. Procédé selon la revendication 16 dans lequel le peroxy-tert-alcanoate très rapide est le peroxynéodécanoate de 1,1-diméthyl-3-hydroxybutyle.

18. Procédé selon la revendication 1 dans lequel le système amorceur de polymérisation est un peroxy-tert-alcanoate lent tel que le peroxypivalate de tert-butyl.

19. Procédé selon l'une quelconque des revendications 1 à 18, **caractérisé en ce que** l'agent d'arrêt de polymérisation

est utilisé à raison de 0,0001 à 0,1 partie en poids pour 100 parties en poids de chlorure de vinyle seul ou en mélange avec moins de 50 % d'un autre monomère vinylique et, de préférence, à raison de 0,00015 et 0,01 partie en poids.

**20.** Polymères et copolymères à base de chlorure de vinyle, obtenus par un procédé selon l'une des revendications 1 à 19.

**Patentansprüche**

**1.** Verfahren zur wäßrigen Suspensionspolymerisation von Vinylchlorid für sich alleine oder im Gemisch mit weniger als 50% eines anderen Vinylmonomers, **dadurch gekennzeichnet, daß** das Polymerisationsinitiatorsystem mindestens eine unter Dialkylperoxydicarbonaten, Peroxy-tert.-alkanoaten and Diacylperoxiden ausgewählte Verbindung enthält und man mindestens einen unter stabilen Radikalen vom Nitroxidtyp ausgewählten Polymerisationsstopper verwendet, der bei einem massebezogenen Monomerenumsatz zwischen 60 und 90% eingetragen wird.

**2.** Verfahren nach Anspruch 1, bei dem man den Polymerisationsstopper unter Nitroxiden der Formel:

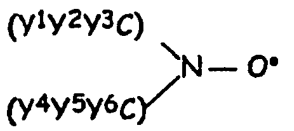

(I)

worin die Gruppen $Y^1$ bis $Y^6$ gleich oder verschieden sind und für ein Wasserstoffatom, einen linearen oder verzweigten Alkylrest mit 1 bis 10 Kohlenstoffatomen, einen Cycloalkylrest mit 3 bis 20 Kohlenstoffatomen, ein Halogenatom, einen Cyanorest, einen Phenylrest, einen Hydroxyalkylrest mit 1 bis 4 Kohlenstoffatomen, einen Dialkoxyphosphonylrest, einen Diphenoxyphosphonylrest, einen Alkoxycarbonylrest oder einen Alkoxycarbonylalkylrest stehen oder 2 oder mehr der Gruppen $Y^1$ bis $Y^6$ mit dem Kohlenstoffatom, an das sie gebunden sind, zu cyclischen Strukturen, die eine oder mehrere exocyclische, unter $H_2N$-$CH_3C(O)NH$-, $(CH_3)\ _2N$- und $R^1C(O)O$-, worin $R^1$ für einen Kohlenwasserstoffrest mit 1 bis 20 Kohlenstoffatomen steht, ausgewählte Funktionen oder auch ein oder mehrere exo- oder endocyclische Heteroatome, wie 0 oder N, enthalten können, verbunden sein können, auswählt.

**3.** Verfahren nach Anspruch 2, **dadurch gekennzeichnet, daß** man die Nitroxide als solche oder in Form von Formulierungen verwendet.

**4.** Verfahren nach Anspruch 2, **dadurch gekennzeichnet, daß** man als Polymerisationsstopper 4-Hydroxy-2,2,6,6-tetramethyl-1-piperidinyloxy (4-Hydroxy-TEMPO) verwendet.

**5.** Verfahren nach den Anspruchen 3 und 4, **dadurch gekennzeichnet, daß** man das 4-Hydroxy-TEMPO in Form von Formulierungen mit einem Gehalt an 4-Hydroxy-TEMPO von 0,01 bis 90 Gew.-% verwendet.

**6.** Verfahren nach Anspruch 2, **dadurch gekennzeichnet, daß** man als Polymerisationsstopper N-tert.-Butyl-1-diethylphosphono-2,2-dimethylpropylnitroxid (SG1) verwendet.

**7.** Verfahren nach einem der Ansprüche 2 bis 6, **dadurch gekennzeichnet, daß** man das Nitroxid mit einem anderen Polymerisationsstopper wie einem Dialkylhydroxylamin kombiniert.

**8.** Verfahren nach Anspruch 7, **dadurch gekennzeichnet, daß** es sich bei dem Dialkylhydroxylamin um Diethylhydroxylamin handelt.

**9.** Verfahren nach Anspruch 1, bei dem jedes Alkylradikal des Dialkylperoxydicarbonats 2 bis 16 Kohlenstoffatome und vorzugsweise 6 bis 16 Kohlenstoffatome enthält.

**10.** Verfahren nach Anspruch 9, bei dem es sich bei dem Dialkylperoxydicabonat um Di(2-ethylhexyl)peroxydicarbonat

handelt.

**11.** Verfahren nach Anspruch 1, bei dem das Polymerisationsinitiatorsystem ein Dialkylperoxydicarbonat und ein sehr schnelles Peroxy-tert.-alkanoat enthält.

**12.** Verfahren nach Anspruch 11, bei dem es sich bei dem sehr schnellen Peroxy-tert.-alkanoat um 1,1-Dimethyl-3-hydroxybutylperoxyneodecanoat handelt.

**13.** Verfahren nach Anspruch 1, bei dem das Polymerisationsinitiatorsystem ein Dialkylperoxydicarbonat und ein schnelles Peroxy-tert.-alkanoat enthält.

**14.** Verfahren nach Anspruch 1, bei dem es sich bei dem Polymerisationsinitiatorsystem um eine Mischung aus einem Dialkylperoxydicarbonat oder einem schnellen Peroxy-tert.-alkanoat und einem Diacylperoxid handelt.

**15.** Verfahren nach Anspruch 14, bei dem es sich bei dem schnellen Peroxy-tert.-alkanoat um tert.-Butylperoxyneodecanoat und bei dem Diacylperoxid um Dilauroylperoxid handelt.

**16.** Verfahren nach Anspruch 1, bei dem es sich bei dem Polymerisationsinitiatorsystem um eine Mischung aus zwei schnellen Peroxy-tert.-alkanoaten oder eine Mischung aus einem sehr schnellen Peroxy-tert.-alkanoat und einem schnellen Peroxy-tert.-alkanoat handelt.

**17.** Verfahren nach Anspruch 16, bei dem es sich bei dem sehr schnellen Peroxy-tert.-alkanoat um 1,1-Dimethyl-3-hydroxybutylperoxyneodecanoat handelt.

**18.** Verfahren nach Anspruch 1, bei dem es sich bei dem Polymerisationsinitiatorsystem um ein langsames Peroxy-tert.-alkanoat wie tert.-Butylperoxypivalat handelt.

**19.** Verfahren nach einem der Ansprüche 1 bis 18, **dadurch gekennzeichnet, daß** man den Polymerisationsstopper in einer Menge von 0,0001 bis 0,1 Gewichtsteilen, bezogen auf 100 Gewichtsteile Vinylchlorid für sich alleine oder im Gemisch mit weniger als 50% eines anderen Vinylmonomers, und vorzugsweise in einer Menge von 0,00015 bis 0,01 Gewichtsteilen verwendet.

**20.** Nach einem Verfahren nach einem der Ansprüche 1 bis 19 erhaltene Polymere und Copolymere auf Basis von Vinylchlorid.

**Claims**

**1.** Process for aqueous suspension polymerization of vinyl chloride alone or in a mixture with less than 50% of another vinyl monomer, **characterized in that** the polymerization initiator system comprises at least one compound selected from dialkyl peroxydicarbonates, peroxy-tert-alkanoates and diacyl peroxides, and **in that** at least one short-stopper selected from stable free radicals of nitroxide type is used, introduced when the monomer conversion by weight is between 60 and 90%.

**2.** Process according to Claim 1, in which the short-stopper is selected from nitroxides of formula:

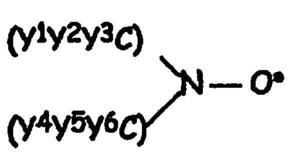

(I)

in which the groups $Y^1$ to $Y^6$, which may be identical or different, represent a hydrogen atom, a linear or branched alkyl radical having from 1 to 10 carbon atoms, a cycloalkyl radical having from 3 to 20 carbon atoms, a halogen atom, a cyano radical, a phenyl radical, a hydroxyalkyl radical having from 1 to 4 carbon atoms, a dialkoxyphosphonyl radical, a diphenoxyphosphonyl radical, an alkoxycarbonyl radical or an alkoxycarbonylalkyl radical, or else

two or more of the groups $Y^1$ to $Y^6$ may be linked with the carbon atom which bears them so as to form cyclic structures which may comprise one or more extracyclic functions chosen from $H_2N-CH_3C(O)NH-$, $(CH_3)_2N-$ and $R^1C(O)O-$ where $R^1$ represents a hydrocarbon-based radical containing from 1 to 20 carbon atoms; or else may comprise one or more extra- or intracyclic hetero atoms, such as O or N.

**3.** Process according to Claim 2, **characterized in that** the nitroxides are used as they stand or in the form of formulations.

**4.** Process according to Claim 2, **characterized in that** the short-stopper is 4-hydroxy-2,2,6,6-tetramethyl-1-piperidinyloxy (4-hydroxy-TEMPO).

**5.** Process according to Claims 3 and 4, **characterized in that** the 4-hydroxy-TEMPO is used in the form of formulations containing a 4-hydroxy-TEMPO content, by weight, ranging from 0.01% to 90%.

**6.** Process according to Claim 2, **characterized in that** the short-stopper is N-tert-butyl-1-diethylphosphono-2,2-dimethylpropyl nitroxide (SG1).

**7.** Process according to one of Claims 2 to 6, in which the nitroxide is combined with another short-stopper, such as dialkylhydroxylamine.

**8.** Process according to Claim 7, **characterized in that** the dialkylhydroxylamine is diethylhydroxylamine.

**9.** Process according to Claim 1, in which each alkyl radical of the dialkyl peroxydicarbonate contains from 2 to 6 carbon atoms, preferably 6 to 16 carbon atoms.

**10.** Process according to Claim 9, in which the dialkyl peroxydicarbonate is di(2-ethylhexyl) peroxydicarbonate.

**11.** Process according to Claim 1, in which the polymerization initiator system comprises a dialkyl peroxydicarbonate and a very fast peroxy-tert-alkanoate.

**12.** Process according to Claim 11, in which the very fast peroxy-tert-alkanoate is 1,1-dimethyl-3-hydroxybutyl peroxyneodecanoate.

**13.** Process according to Claim 1, in which the polymerization initiator system comprises a dialkyl peroxydicarbonate and a fast peroxy-tert-alkanoate.

**14.** Process according to Claim 1, in which the polymerization initiator system is a mixture of a dialkyl peroxydicarbonate or a fast peroxy-tert-alkanoate with a diacyl peroxide.

**15.** Process according to Claim 14, in which the fast peroxy-tert-alkanoate is tert-butyl peroxyneodecanoate and the diacyl peroxide is dilauroyl peroxide.

**16.** Process according to Claim 1, in which the polymerization initiator system is a mixture of two fast peroxy-tert-alkanoates or a mixture of a very fast peroxy-tert-alkanoate and a fast peroxy-tert-alkanoate.

**17.** Process according to Claim 16, in which the very fast peroxy-tert-alkanoate is 1,1-dimethyl-3-hydroxybutyl peroxyneodecanoate.

**18.** Process according to Claim 1, in which the polymerization initiator system is a slow peroxy-tert-alkanoate, such as tert-butyl peroxypivalate.

**19.** Process according to any one of Claims 1 to 18, **characterized in that** the short-stopper is used in a proportion of 0.0001 to 0.1 part by weight per 100 parts by weight of vinyl chloride alone or in a mixture with less than 50% of another vinyl monomer, and preferably in a proportion of 0.00015 and 0.01 part by weight.

**20.** Polymers and copolymers based on vinyl chloride, obtained using a process according to one of Claims 1 to 19.